# EUROPEAN PATENT APPLICATION

(11) **EP 4 759 403 A1**
(43) Date of publication of application: **17.06.2026**
(21) Application number: 24383358.9
(22) Date of filing: 12.12.2024
(51) Int. Cl.: B01J 8/00, B01J 8/06, C10L 3/08

(54) **AN AUTOTHERMAL CATALYTIC REACTOR FOR THE CONVERSION OF THE CO2 CONTAINED IN BIOGAS AND HYDROGEN INTO RENEWABLE NATURAL GAS**

(71) Applicant: Naturgy Innovahub S.L.U., 28028 Madrid (ES); Fundació Institut de Recerca en Energia de Catalunya (IREC), 08930 Sant Adrià de Besòs (ES)
(72) Inventor: GUILERA SALA, Jordi, 08720 Vilafranca del Penedès (ES); BISET PEIRO, Martí, 08025 Barcelona (ES); MARTÍN MORALES, Elena, 08006 Barcelona (ES)
(74) Representative: Ponti & Partners, S.L.P

(57) **Abstract**

The present invention relates to an autothermal catalytic reactor for the conversion of the CO₂, contained in biogas, and hydrogen, which are in a molar fraction H₂:CO₂ between 3.5 and 4.5, into renewable natural gas with a composition comprising more than 90% (v/v) CH₄. The present invention also relates to a process for said conversion, wherein said process involves using the autothermal catalytic reactor.

## Description

### Field of the invention

The present invention relates to an autothermal catalytic reactor, in particular to an autothermal catalytic reactor for the conversion of the CO₂ contained in biogas and hydrogen into renewable natural gas, and to a process using said autothermal catalytic reactor.

### Background

Biogas is a renewable gas obtained from the anaerobic digestion of biodegradable organic matter, such as livestock manure, sewage sludge, organic fraction of municipal waste and waste from the agricultural industry. Biogas is principally a mixture of methane (CH₄) and carbon dioxide (CO₂). If this gas is combined with green hydrogen (H₂), it is possible to obtain a renewable gas with a composition very similar to that of natural gas of fossil origin currently consumed in different applications.

Through the direct combination of biogas with hydrogen, the CO₂ component in biogas undergoes a catalytically activated methanation reaction, converting it into CH₄. This newly generated CH₄ is added to the CH₄ already present in the biogas, increasing the total methane content from 50-70% to 90-99%. Unlike other approaches, such as upgrading, biogas methanation allows for the full utilization of biogenic carbon from the digester. Typically, this reaction is carried out in catalytic reactors at moderate temperatures and pressures or in biological reactors at low temperatures and pressures.

CO₂ + 4 H₂ --> CH₄ + 2 H₂O (methanation reaction Δ=-165kJ)

The production of renewable natural gas through methanation enables the replacement of fossil natural gas with a sustainable alternative. By converting biogenic CO₂ from biogas into additional methane, methanation maximizes energy yield and supports carbon neutrality by fully utilizing all carbon biogas-derived from organic sources. This renewable natural gas is chemically identical to fossil natural gas, allowing it to be used interchangeably in existing gas infrastructure, such as pipelines and storage facilities, as well as in all natural gas applications, from power generation and heating to industrial processes.

The methanation reaction is an exothermic reaction (Δ=-165kJ), which requires proper management of the heat released during the reaction to avoid "hot spots" that could compromise the catalytic activity and structural integrity of the reactor. To regulate reactor temperature, established catalytic methanation technologies rely on different reactor technologies such as adiabatic, isothermal, and polytropic fixed-beds, as well as fluidized-bed, slurry, and structured (micro-channel, honeycomb, or sorption-enhanced) reactors. Temperature control remains a central challenge, often managed through the integration of compact, heat-exchanger-type units that demand intensive cooling systems. This configuration typically requires additional equipment, such as recirculating cooling pumps, heat exchangers, and chillers, significantly increasing both CAPEX (Capital Expenditures) and OPEX (Operating Expenditures) due to ongoing energy costs for pump operation, coolant circulation, and maintenance. Additionally, the high CAPEX is not only attributed to these auxiliary systems but also to the complexity of the reactor designs themselves, adapted from the petrochemical industry to maximize process intensification.

For low-to-medium capacity biogas plants (10-500 Nm³/h), the economic feasibility of heat-exhanger-type units and heat integration systems is even more limited. These smaller, decentralized plants, which primarily rely on biogas from organic waste, face high investment costs for effective heat integration that cannot be justified by their relatively low heat output. As a result, these technologies are generally unaffordable for the rural sector, which is one of the primary producers of biogas from organic waste. This gap highlights the need for reactor designs that are both economically and technically viable for low-to-medium capacity biogas operations.

In order to overcome the above-mentioned drawbacks, the present inventors have developed a new and advantageous technology particularly useful for low-to-medium capacity plants. The main advantages are as follows:
- The reactors have been designed with the strategy "as simple as possible, as complex as necessary". With this in mind, all the elements (reactor, analysers and auxiliary equipment) have been designed with the aim of reducing costs. The aim of this strategy is to achieve its distributed implementation, wherever waste from livestock and agricultural operations is generated, avoiding the transport and treatment of waste in centralised plants.
- The methanation reaction is exothermic and generates heat. This heat is used to maintain the reactor at the optimum temperature range and that heat which is not needed is released to the environment based on free convection. The reactor design, including reactor individual channel dimensions, prototype design and insulation system, has been optimised with the objective that the optimum temperature profile is achieved by simple exchange with the air, without the need for intense cooling.
- The material that is implemented inside the reactor is a microcatalyst. It may consist of microspheres of alumina, nickel and cerium oxide. This material has a higher activity and selectivity than other commercial products, but the most important thing is that it is more tolerant to the typical impurities of biogas and allows it to be used for a longer period of time.
- The technology avoids including heat dissipation systems in the reactor itself. This makes the design much simpler and easier to build. Moreover, it avoids the engineering of auxiliary systems to cool the reactor (thermal oil, pressurised water). In small plants, the integration of this heat with other processes is not feasible and therefore, these cooling systems consume energy (compressors, fans, pumps). In this way, both investment and operating costs are reduced.

### Summary of the invention

In a first aspect, the present invention relates to an autothermal catalytic reactor for the conversion of the CO₂, contained in biogas, and hydrogen, which are in a molar fraction H₂:CO₂ between 3.5 and 4.5, into renewable natural gas with a composition comprising more than 90% (v/v) CH₄.

In a second aspect, the present invention relates to a process for the conversion of the CO₂ contained in biogas and hydrogen, which are in a molar fraction H₂:CO₂ between 3.5 and 4.5, into renewable natural gas with a composition comprising more than 90% (v/v) CH₄, wherein said process involves using the autothermal catalytic reactor according to the first aspect.

### Brief description of the drawings

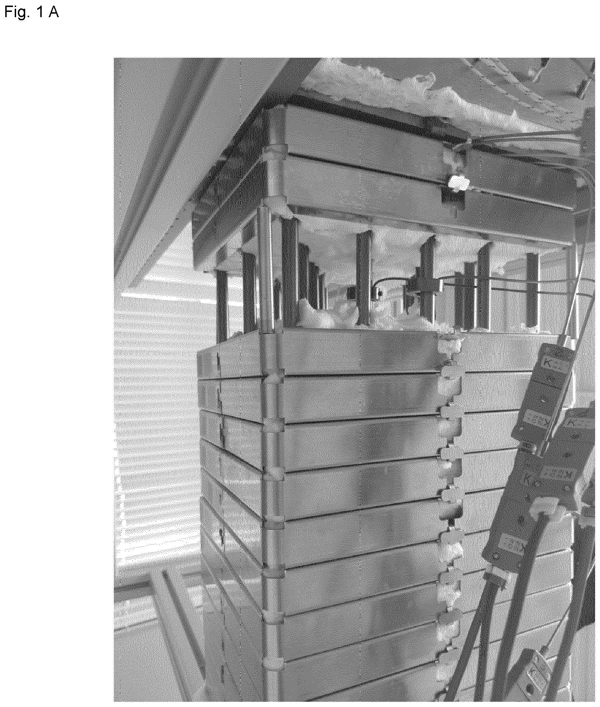

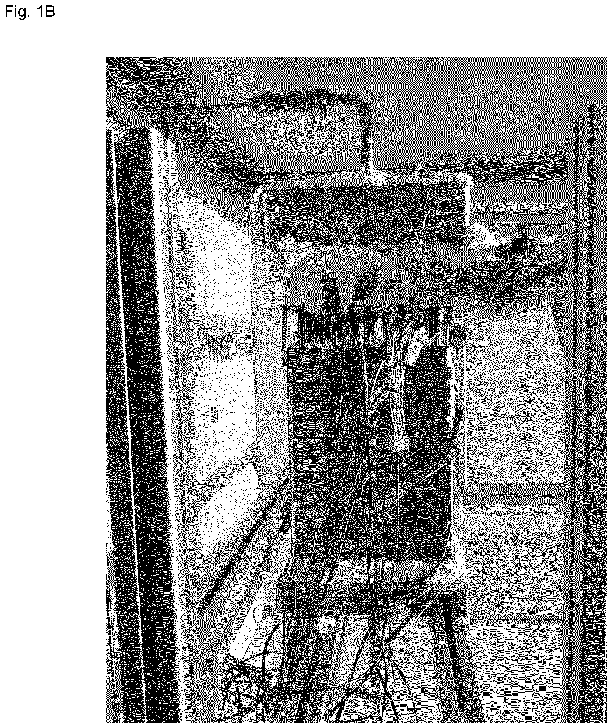

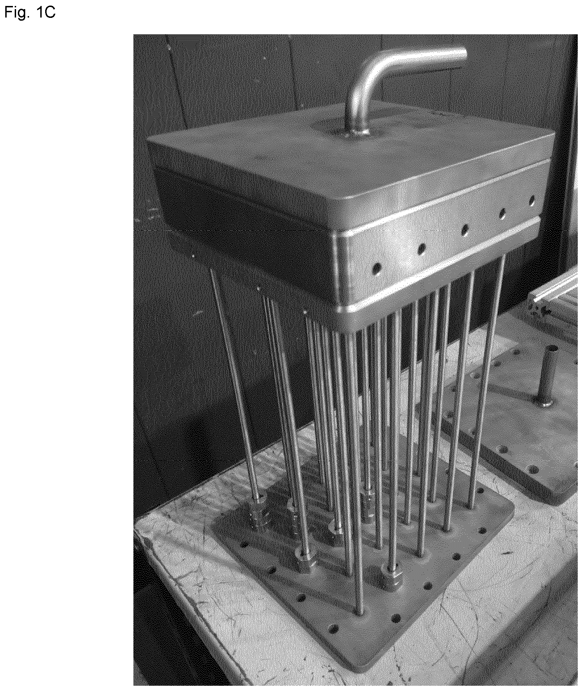

Fig.1A, 1B and 1C show pictures of the reactor of the present invention. Fig. 1A shows the upper pat of the reactor with the non-insulated zone. Fig. 1B shows the whole reactor. Fig. 1C specifically shows the gas inlet at the very top and the distributor gas connected to the gas inlet, wherein the gas distributor shows five holes for the pre-heaters used during start-up.

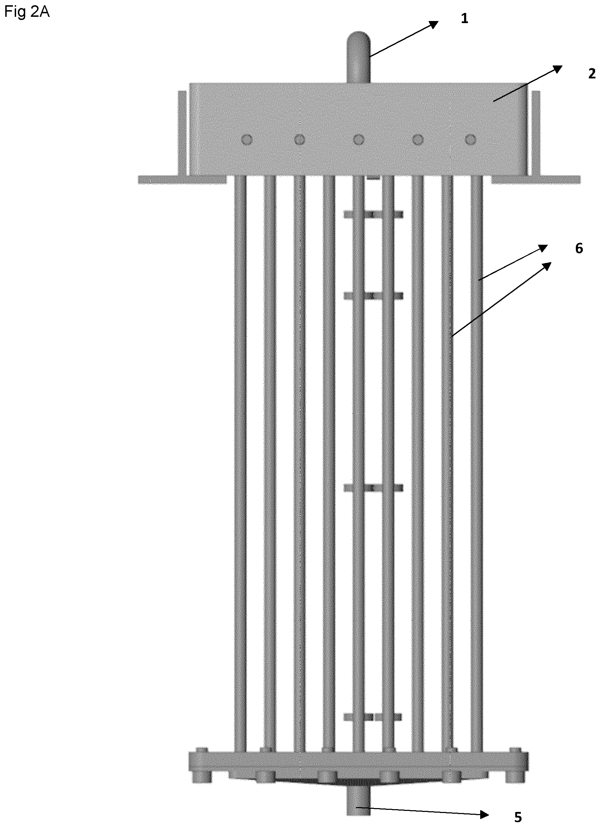

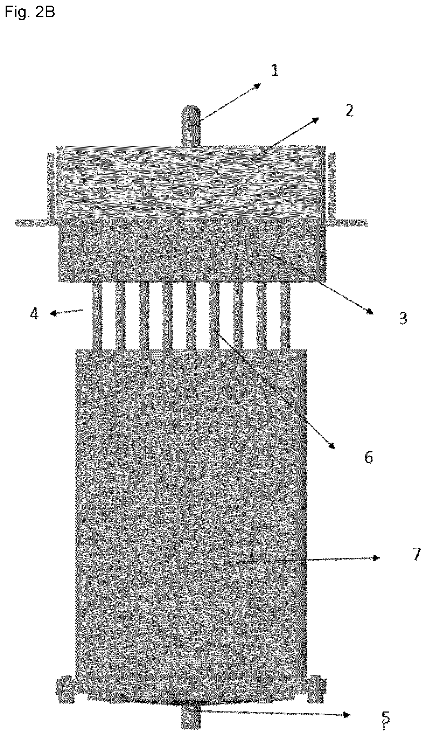

Fig. 2A and 2B show schematically the different parts of the reactor of the invention. In particular Fig. 2A shows the reactor of the invention without the insulating parts in order to clearly show the multiple reactor channels between gas distributor and gas outlet. Fig. 2B shows the reactor according to the present invention, wherein:
   (1) represents the gas inlet,
   (2) represents the gas distributor,
   (3) represents the insulating structure adjacent to the gas distributor (2),
   (4) represents the non-insulating area between the insulating structure (3) and the insulating structure (7) adjacent to the gas outlet (5),
   (5) represents the gas outlet,
   (6) represents the multiple reactor channels, and
   (7) represents the insulating structure adjacent to the gas outlet (5).

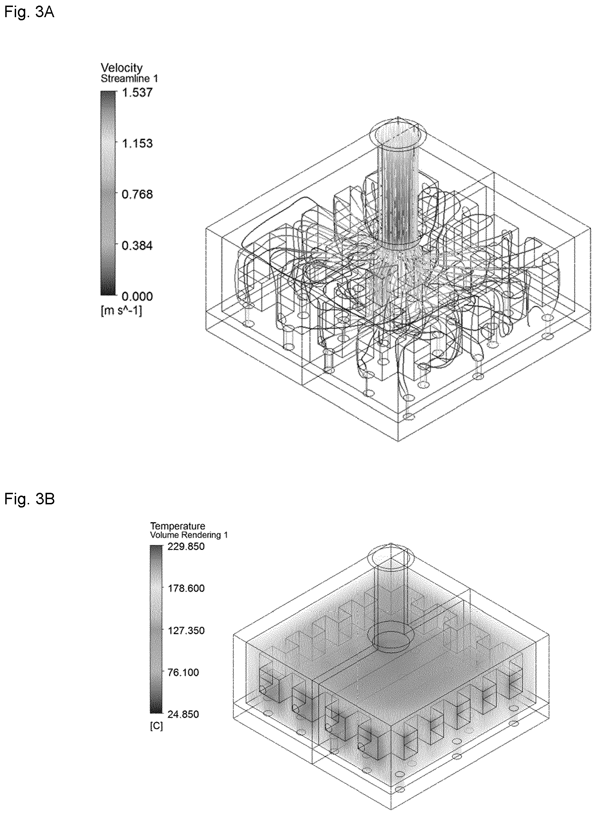

Fig. 3A shows a simulation of the gas distributor under operation. Fig. 3B shows the temperature profile in the gas distributor under operation.
Fig. 4 shows different configurations of the upper part of reactor channels, just below the gas distributor, in order to optimize the yield of renewal natural gas. Configuration R_A, the reactor is fully insulated. Configuration R_B, R_C and R_D have different insulation/non-insulation areas in the upper part of the reactor.
Fig. 5 shows the temperature profiles of reactor configuration R_A, R_B, R_C and R_D according to figure 4. Position 0 corresponds to the top of the reactor (just below the gas distribution system) while the 350 mm are just at the output of the channels.
Fig. 6 shows different configurations of the upper and middle part of reactor channels.
Fig. 7 shows the temperature profiles of reactor configurations R_E, R_F and R_G. Position 0 corresponds to the top of the reactor (just below the gas distribution system) while the 350 mm are just at the output of the channels.
Fig. 8 shows the final configuration of the reactor for autothermal operation. (left: a picture; right: schematically)
Fig. 9 shows a stability experiment. a) temperature during start-up. b) distribution of thermocouple used during the experiment.
Fig. 10 shows the gas output composition during a 24-hour stability experiment (upper blue line corresponds to CH₄ and lower orange line corresponds to CO₂)
Fig. 11 shows the temperature profile obtained during the stability experiment. Temperature profile is obtained during the start-up and at the end of the experiment. The -25 mm temperature measurement corresponds to the gas distribution part. (Orange color (lower line) is CO₂ and blue (upper line) is CH₄).

### Detailed description

### Definitions

The term **"autothermal"** as used in the present invention is referred to a reactor which does not contain any heating or cooling system in or around the multiple reactor channels and accordingly the reaction occurs using only the heat produced by the exothermicity of the reaction itself. In the present invention, a pre-heating of the gas distributor (see below) is needed but once the gas distributor has reached the desired temperature, the reactor works autothermally.

The term **"biogas"** as used in the present invention is an environmentally-friendly, renewable energy source produced by the breakdown of organic matter such as food scraps and animal waste. Biogas consists mainly of methane and carbon dioxide. It can also include small amounts of hydrogen sulphide, siloxanes, oxygen, nitrogen, volatile organic compounds and some moisture. The relative quantities of these vary depending on the type of waste involved in the production of the resulting biogas. Nowadays, biogas is primarily used for generating electricity, producing heat, and upgrading to biomethane for injection into natural gas grids or use as a renewable energy source and occasionally in fueling vehicles. If biogas is cleaned up and upgraded to natural gas standards, it's then known as biomethane and can be used in a similar way to methane. Biomethane can be used for heating buildings, generating electricity, fueling vehicles, powering industrial processes, and supplying energy to households and businesses.

The term **"microcatalyst"** as used in the present invention relates to a catalyst with particles whose mean particle diameter is lower than 1 mm.

The term **"renewable natural gas"** as used in the present invention refers to gas produced through the methanation of carbon dioxide (CO₂) contained in biogas and hydrogen (H₂). This process yields a gas with a composition exceeding 90% (v/v) methane (CH₄) and contains both H₂ and CO₂. Renewable natural gas is chemically similar to fossil natural gas and biomethane produced from upgrading plants, enabling its use in various applications such as injection into natural gas grids, heating, and fueling vehicles.

### Detailed description of the invention

In a first aspect, the present invention relates to an autothermal catalytic reactor for the conversion of the CO₂ contained in biogas and hydrogen, which are in a molar fraction H₂:CO₂ between 3.5 and 4.5, preferably between 3.9 and 4.1, into renewable natural gas with a composition comprising more than 90% (v/v) CH₄, designed from top to bottom with the following structure:
- a gas inlet (1) for introducing biogas and hydrogen, wherein said gas inlet is connected to a gas distributor (2);
- the gas distributor (2) for distributing the biogas and hydrogen in a uniform manner through multiple reactor channels (6) until reaching a gas outlet (5), wherein said multiple reactor channels (6) each have a length of between 30 and 60 cm, an inner diameter in the range of 4 to 6 mm and a microcatalyst with a particle diameter lower than 1 mm is inserted in each reactor channel; and wherein said gas distributor further includes pre-heating heaters;
- a gas outlet (5) for collecting an exiting gas comprising methane, wherein said methane represents more than 90 % v/v of the exiting gas, preferably more than 93 % v/v methane, more preferably more than 95 % v/v methane, along with water vapour

wherein the channels are surrounded:
   - by an insulating structure (3) of 3 to 8 cm long adjacent to the gas distributor, and
   - by an insulating structure (7) adjacent to the gas outlet with both structures having a metallic housing, preferably made of stainless steel, and an insulating material, preferably made of silicate fibers, wrapping the reactor channels;
wherein there is a non-insulating area (4) between the insulating structure (3) of 3 to 8 cm long and the insulating structure (7) adjacent to the gas outlet (5) where the multiple reactor channels (6) are opened to air, and wherein this non-insulating area (4) is from 3 to 8 cm long,
wherein the reactor is operated at a temperature between 250 and 550 °C and a pressure between 400 kPa and 10³ kPa, and
with the proviso that the reactor does not contain any heating or cooling system in or around the multiple reactor channels.

The pre-heating heaters are used for the start-up. They are included in the gas distributor are used by switching them on to rise the temperature of the biogas and hydrogen mixture coming from the gas inlet to the desired temperature (250-350 °C). As soon as the methanation reaction starts, temperatures along the reactor increase gradually due to the exothermicity of the methanation reaction and heaters are then switched off.

In a preferred embodiment, the number of reactor channels is between 20 and 30, more preferably, the number of reactor channels is 23.

In another preferred embodiment, the length of each of the reactor channels is between 30 and 50 cm, more preferably, the length of each of the reactor channels is 40 cm.

In another preferred embodiment, the distribution of the multiple reactor channels forms a triangular lattice.

In another preferred embodiment, the inner diameter of each reactor channel is 5 mm.

In another preferred embodiment, the distance between two reactor channels is between 3 and 6 cm, preferably the distance between two reactor channels is 4 cm.

In another preferred embodiment, the length of the insulating structure adjacent to the gas distributor is 5 cm and independently the length of the non-insulating structure is 5.5 cm.

In another preferred embodiment, the microcatalyst included in the multiple reactor channels is a nickel-aluminium oxide-based microcatalyst or a nickel-cerium oxide-based microcatalyst, preferably a nickel-cerium oxide-aluminium oxide microcatalyst. This material has a higher activity and selectivity than other commercial products, but the most important thing is that it is more tolerant to the typical impurities of biogas and allows it to be used for a longer period of time.

The exiting gas is renewable natural gas along with water vapour. This water is subsequently separated after condensation.

In a second aspect, the present invention relates to a process for the conversion of the CO₂ contained in biogas and hydrogen, which are in a molar fraction H₂:CO₂ between 3.5 and 4.5, preferably between 3.9 and 4.1, into renewable natural gas with a composition comprising more than 90% (v/v) CH₄, comprising the steps of:
a) introducing biogas and hydrogen through the gas inlet of the autothermal catalytic reactor as defined according to any of the embodiments of the first aspect of the invention;
b) heating the introduced biogas and hydrogen in the gas distributor at a temperature between 250 and 350 °C;
c) once the gas distributor has reached the desired temperature, stopping the heating;
d) allowing the reaction to proceed autothermally in the multiple reactor channels;
e) collecting the renewable natural gas from the autothermal catalytic reactor, wherein said renewable natural gas comprises methane, with said methane representing more than 90 % v/v of the renewable natural gas, preferably more than 93 % v/v methane, more preferably more than 95 % v/v methane.

The heating step b) is carried out by heaters included in the gas distributor.

The collected renewable natural gas also includes water vapour which is collected by condensation after cooling off said collected renewable natural gas.

It is noted that any of the embodiments disclosed herein can be taken alone or combined with any other embodiment disclosed herein unless the context specifies otherwise. In other words, for example, a preferred option of a defined feature can be combined with a more or less preferred option of another feature.

The invention will be now illustrated by way of several examples, which do not intend to limit its scope.

### EXAMPLE

### Preparation of microcatalyst

The microcatalyst fabricated in these experiments contained 15% nickel and 10% ceria supported on porous alumina microspheres. The fabrication and activation procedures are standard practices and have been previously documented in the literature (see https://doi.org/10.1016/j.cherd.2023.11.060; https://linkinghub.elsevier.com/retrieve/pii/S0378382019302437; and https://linkinghub.elsevier.com/retrieve/pii/S036031991102845X).

The precursor salts consisting of 231 g Ni(NO₃)₂-6H₂O and 79 g Ce(NO₃)₃-6H₂O are dissolved in 450 mL H2O. 233 g Al₂O₃ are then added to the solution and mixed for 1 h (rotation). The solvent is evaporated at 80 °C by rotary evaporator (approx. 24 h). The residual moisture is removed by drying the material at 105 °C for 12 h and the material is calcined at 450 °C for 30 min, with a heating rate of 2 °C/min.

Prior to experimentation on the reactor, the activity of the microcatalyst was tested in the temperature range of 250-400°C for 48 hours.

Currently, the microcatalyst activation protocol is as follows:
- Ex situ activation in tube furnaces without passivation (T=500°C for 3 hours under a H2 flow of 100 mL/min, using a heating ramp of 1°C/min).
- The microcatalyst was reactivated in situ in the reactor under H2 with the heaters at 400°C for 1 night. The N0 to N2 levels were maintained above 250° (N1~350°C).

### Optimization of insulation system

Multiple configurations for the reactor insulation system were tested in order to obtain the optimum temperature profile. This optimal profile should allow to obtain:
- as much methane as possible at the outlet (CH4>90%, preferably CH4>95%)
- prevention of microcatalyst degradation due to high temperature (Tmax<550°C, preferably Tmax<500°C)
- insulation of the gas distributor to reduce heat loss in this area and promote autothermicity.

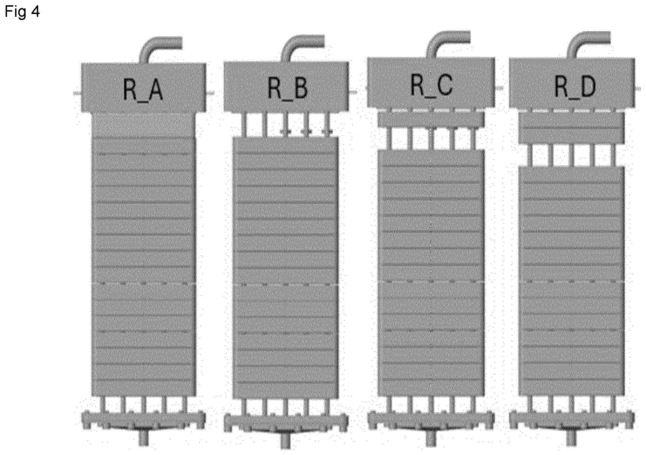

Fig. 4 shows different configurations each one with specific insulation/non-insulation area. The first 4 configurations (R_A to R_D), the improvements in the design focused on the upper part of the reactor, just below the gas distributor. A summary of the obtained gas composition is presented in Table 1 and 2.

**Table 1. Compositions obtained in the different configurations at 100% capacity (1 m³/h of biogas).**

| Reactor Configuration | Output gas composition | | |
|---|---|---|---|
| | CO2 | CH4 | H2 |
| 270624-R_A | >5 | <60 | >40 |
| 20724-R_B | 4.3 | 60.8 | 35.0 |
| 40724-R_C | 3.2 | 84.3 | 12.5 |
| 40724-R_D | 2.9 | 85.5 | 11.7 |

**Table 2. Compositions obtained in the different configurations at 60% capacity (0.6 m³/h of biogas).**

| Reactor Configuration | Output gas composition | | |
|---|---|---|---|
| | CO2 | CH4 | H2 |
| 30724-R_B | 4.6 | 84.6 | 9.8 |
| 30724-R_C | 3.3 | 90.2 | 6.5 |
| 40724-R_D | 3.0 | 93.4 | 3.7 |

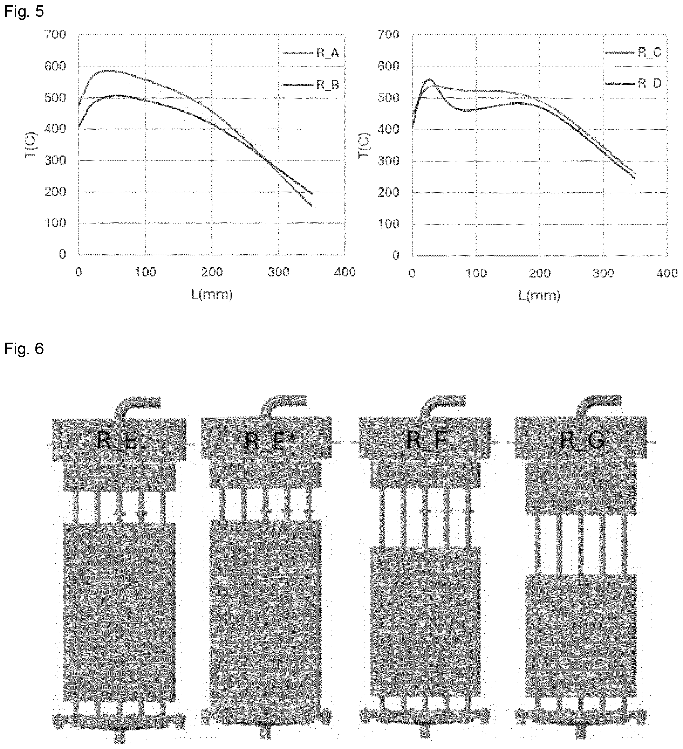

The most important results were:
- Reactor configuration with non-optimal temperature profile (Fig. 5), too high temperature in the upper part of the reactor and too low in the bottom, produce lower amount of CH4 (60-84%).
- Under non-optimum temperature profile, high gas quality can only be obtained by lowering the working capacity to 60% (2 m³/h to 1.2 m³/h). This mode of operation is not ideal as it implies that the maximum working capacity is lower than nominal, but it is interesting to have this option in specific cases of reduced productivity of the industrial reactor.

The middle and bottom part of the insulation were tested in configuration R_E to R_G (Fig. 6) while the lower part of the reactor was also insulated (configuration R_E vs R_E*).

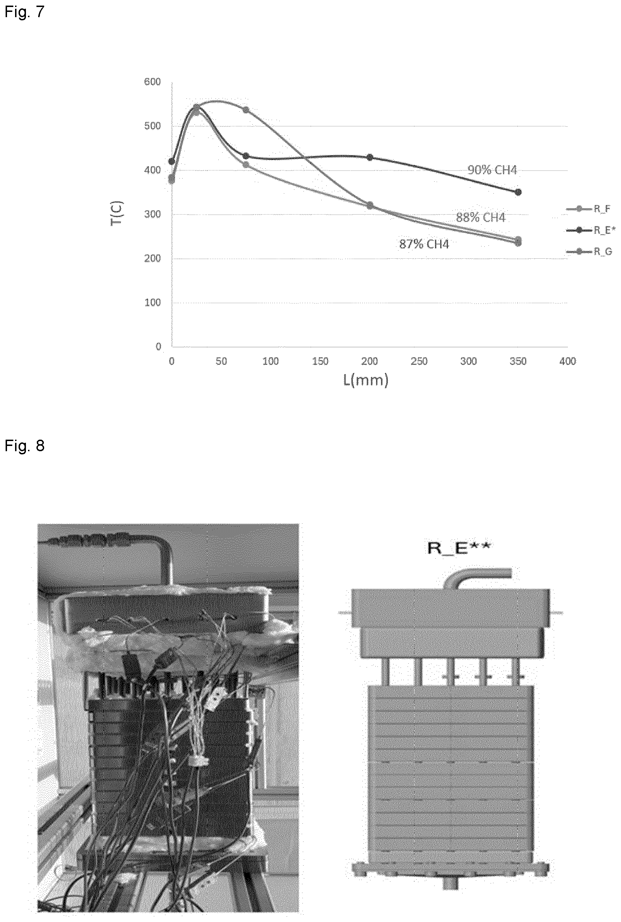

The most important results were:
- by insulating the last part of the reactor, temperature drop across reactor was lower and the quality of the gas obtained improved (88-91%). The lower part of the reactor channels must be insulated to achieve temperatures above 200°C, preferably above 250°C.
- configurations with lower temperature than 350°C (at position 20 cm) in the middle of reactor (R_F and R_G) gives less productivity of CH4 (Fig. 7).

It was concluded that the best configuration is R_E*, which has the optimum insulation in the top-middle part and with the lower part of the reactor insulated, obtaining the best temperature profile (Fig. 7). The obtained composition reached 90% of CH4 working at 100% of reactor capacity.

### Final reactor configuration: optimization of working conditions

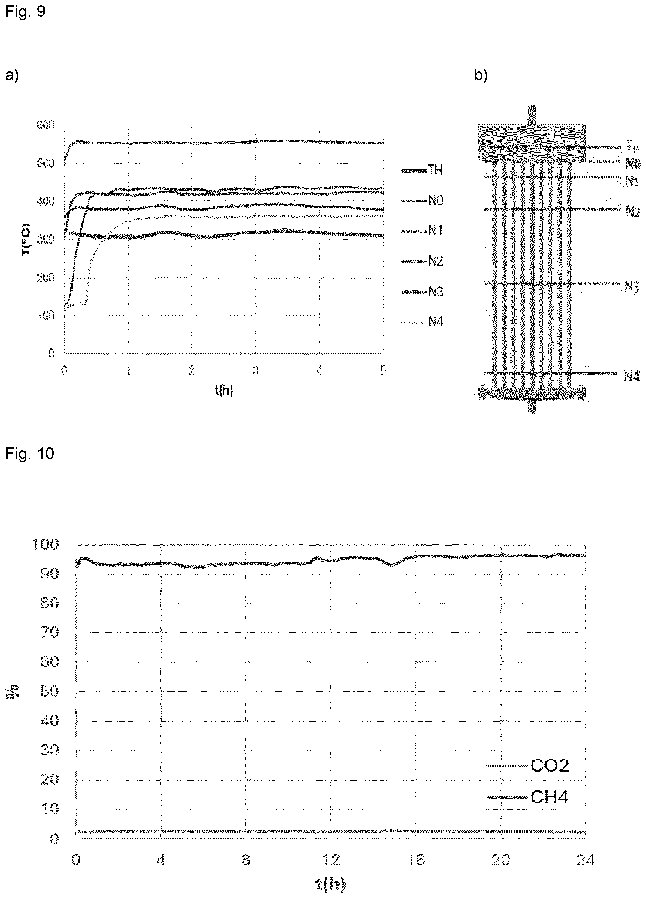

The R_E* configuration optimizes the conversion of CO₂ to CH₄. In this profile, the temperature of the central thermocouples is kept above 400 °C up to 20 cm away from the reactor (N3), and at 35 cm away (N4) above 300 °C (see Fig. 9B). The remaining experiments, in which the inlet flows and working pressures are varied, were then always carried out with this optimal configuration.

Table 3 shows the gas composition obtained by changing the reactor pressure from 5 to 8 bar. The most important results were:
- The amount of CH4 produced increases as a function of the pressure.
- At 100% of capacity and at 7-8 bar and with a simulated biogas composition of 37%, outlet gas values of CH4 of 90-92% and CO2 lower than 2.5 % were achieved.
- **The obtained gas composition fulfills the requirements to be injectable in the gas network** (CO2 < 2.5%, H2 < 5% and CH4 > 90%).

**Table 3. Compositions obtained as a function of pressure at 100% capacity.**

| p(bar) | Output gas composition | | |
|---|---|---|---|
| | CO2 | CH₄ | H₂ |
| 5 | 2.6 | 90.2 | 7.1 |
| 7 | 2.4 | 92.6 | 5.6 |
| 8 | 2.2 | 93.8 | 4.7 |

Once the optimal insulation configuration has been obtained, the autothermicity conditions were optimised. With these objectives in mind, modifications are made to ensure that the reactor operates without gas preheating. Thus, the upper part (gas distributor) is modified, increasing the level of insulation (See Fig. 8).

### Autothermic and stability of the reactor

Autothermic conditions were validated with an experiment of stability carried out during 24 hours of continuous operation. In this case, the experiment was carried out at a pressure of 6.5 bar.

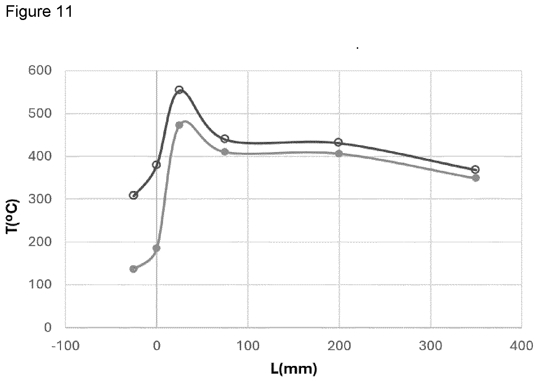

The most important results were:
- During the first hours (See Fig. 9A), it could already be seen that the system can be stabilized in less than one hour. During the stability experiment, a methane quality of 92-93% was obtained throughout the experiment (See Fig. 10).
- The reactor performed robustly against external changes, such as variation in CO2 and CH4 during the experiments.
- The temperature of the gas distributor system could be reduced during the experiments (Fig 11). Initially, the gas distributor system was keep a temperature above 300 °C with the pre-heater (0.35kW). That temperature is only needed during start-up. After starting the reaction, the temperature of the gas distributor system was reduced to 130°C, maintained only by the heat released by the reaction (without heaters), working in autothermic conditions.

The rector can work with lower temperature in the gas distributor during the autothermic conditions. That temperature is also beneficial for:
- Reducing the hot-spot and thus the degradation of the microcatalyst
- Slightly lower the temperature profile of the whole reactor.
- Increasing the quality of methane produced
- Reducing energy consumption

### Conclusions

The basic unit of the biogas methanation reactor has been successfully experimentally validated in an operational environment with syngas.

The microcatalyst has performed satisfactorily during the final experimental phase. The experimentation has resulted in the optimal isolation configuration. The current reactor design with strong insulation at the head, a first insulated zone (6 cm), a second uninsulated zone (5.5 cm) and the final insulated zone (28.5 cm), allows the desired temperature profile to be obtained at maximum capacity.

The basic unit can obtain the quality of renewable gas injectable into the gas network (CH4>90%, H2<5%, CO2<2.5%) at 100% capacity (20 L H2/h, equivalent to 1 Nm3/h of biogas) at moderate pressure (P<10 bar). According to plant results this composition can be achieved at a working pressure of 7-9 bar. The unit allows this quality to be obtained quickly (less than 1 hour), stably (150-200 hours of operation, 24h continuously) and robustly (not altered by changes in biogas composition, nor external effects such as room temperature or operational problems).

## Claims

1. An autothermal catalytic reactor for the conversion of the CO₂ contained in biogas and hydrogen, which are in a molar fraction H₂:CO₂ between 3.5 and 4.5, into renewable natural gas with a composition comprising more than 90% (v/v) CH₄, designed from top to bottom with the following structure:
- a gas inlet (1) for introducing biogas and hydrogen, wherein said gas inlet is connected to a gas distributor (2);
- the gas distributor (2) for distributing the biogas and hydrogen in a uniform manner through multiple reactor channels (6) until reaching a gas outlet (5), wherein said multiple reactor channels (6) each have a length of between 30 and 60 cm, an inner diameter in the range of 4 to 6 mm and a microcatalyst with a particle diameter lower than 1 mm is inserted in each reactor channel; and wherein said gas distributor further includes pre-heating heaters;
- a gas outlet (5) for collecting an exiting gas comprising methane, wherein said methane represents more than 90 % v/v of the exiting gas, along with water vapour;
wherein the channels are surrounded:
- by an insulating structure (3) of 3 to 8 cm long adjacent to the gas distributor, and
- by an insulating structure (7) adjacent to the gas outlet with both structures having a metallic housing and an insulating material wrapping the reactor channels;
wherein there is a non-insulating (4) area between the insulating structure (3) of 3 to 8 cm long and the insulating structure (7) adjacent to the gas outlet (5) where the multiple reactor channels (6) are opened to air, and wherein this non-insulating area (4) is from 3 to 8 cm long,
wherein the reactor is operated at a temperature between 250 and 550 °C and a pressure between 400 kPa and 10³ kPa, and
with the proviso that the reactor does not contain any heating or cooling system in or around the multiple reactor channels.

2. The autothermal catalytic reactor according to claim 1, wherein the number of reactor channels is between 20 and 30.

3. The autothermal catalytic reactor according to claim 2, wherein the number of reactor channels is 23.

4. The autothermal catalytic reactor according to any of preceding claims, wherein the length of each of the reactor channels is between 30 and 50 cm.

5. The autothermal catalytic reactor according to claim 4, wherein the length of each of the reactor channels is 40 cm.

6. The autothermal catalytic reactor according to any of preceding claims, wherein the distribution of the multiple reactor channels forms a triangular lattice.

7. The autothermal catalytic reactor according to any of preceding claims, wherein the distance between two reactor channels is between 3 and 6 cm.

8. The autothermal catalytic reactor according to claim 7, wherein the distance between two channels is 4 cm.

9. The autothermal catalytic reactor according to any of preceding claims, wherein the inner diameter of each reactor channel is 5 mm.

10. The autothermal catalytic reactor according to any of preceding claims, wherein the length of the insulating structure adjacent to the gas distributor is 5 cm.

11. The autothermal catalytic reactor according to any of preceding claims, wherein the length of the non-insulating structure is 5.5 cm.

12. The autothermal catalytic reactor according to any of preceding claims, wherein the microcatalyst is a nickel-aluminium oxide-based or a nickel-cerium oxide-based microcatalyst, preferably a nickel-cerium oxide-aluminium oxide microcatalyst.

13. The autothermal catalytic reactor according to any of preceding claims, wherein the gas collected in the gas outlet comprises more than 93 % v/v methane, preferably more than 95 % v/v methane.

14. The autothermal catalytic reactor according to any of preceding claims, wherein the molar fraction H₂:CO₂ is between 3.9 and 4.1.

15. A process for the conversion of the CO₂ contained in biogas and hydrogen, which are in a molar fraction H₂:CO₂ between 3.5 and 4.5, into renewable natural gas with a composition comprising more than 90% (v/v) CH₄, comprising the steps of:
a) introducing biogas and hydrogen through the gas inlet from the autothermal catalytic reactor according to any of claims 1 to 14;
b) heating the introduced biogas and hydrogen in the gas distributor at a temperature between 250 and 350 °C;
c) once the gas distributor has reached the desired temperature, stopping the heating;
d) allowing the reaction to proceed autothermally in the multiple reactor channels;
e) collecting the renewable natural gas from the autothermal catalytic reactor, wherein said renewable natural gas comprises methane, with said methane representing more than 90 % v/v of the renewable natural gas.
